(19) Europäisches Patentamt
European Patent Office
Office européen des brevets

(11) Numéro de publication: **0 299 808 B1**

(12) **FASCICULE DE BREVET EUROPEEN**

(45) Date de publication de fascicule du brevet: **13.01.93**

(51) Int. Cl.[5]: **D06M 14/04**, D06M 14/06, D06M 14/16

(21) Numéro de dépôt: **88400863.2**

(22) Date de dépôt: **11.04.88**

(54) **Procédé de greffage par un monomère fluoré assurant l'imperméabilité d'un matériau textile.**

(30) Priorité: **14.04.87 FR 8705308**

(43) Date de publication de la demande:
**18.01.89 Bulletin 89/03**

(45) Mention de la délivrance du brevet:
**13.01.93 Bulletin 93/02**

(84) Etats contractants désignés:
**BE CH DE GB IT LI NL**

(56) Documents cités:
**FR-A- 1 230 487**
**FR-A- 2 043 767**
**FR-A- 2 148 432**

(73) Titulaire: **INSTITUT TEXTILE DE FRANCE**
**35, rue des Abondances, B.P. 79**
**F-92105 Boulogne-Billancourt Cédex(FR)**

(72) Inventeur: **Poulenard, Jacques**
**112, rue Dr E. Locard**
**F-69005 Lyon(FR)**
Inventeur: **Gavet, Louis**
**110, rue Dr Ed Locard**
**F-69005 Lyon(FR)**
Inventeur: **Chatelin, Roger**
**36, allée Mont d'Or Bois-Dieu**
**F-69380 Lissieu(FR)**
Inventeur: **Giorgio, Annie**
**21, rue Alfred Brinon**
**F-69100 Villeurbanne(FR)**

(74) Mandataire: **Hasenrader, Hubert et al**
**Cabinet BEAU DE LOMENIE 55, rue d'Amsterdam**
**F-75008 Paris(FR)**

**EP 0 299 808 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de greffage d'un matériau polymérique textile, tel que coton, lin, laine, soie, polyamide, par un monomère fluoré afin de rendre ce materiau imperméable à l'eau.

Le greffage d'un matériau polymérique par un monomère fluoré pour augmenter son caractère répellant vis-à-vis de l'eau est connu de l'art antérieur. On peut citer les brevets FR 2 148 432 et US-A-3 912 449. Ce dernier décrit un tel procédé de greffage appliqué à un matériau textile cellulosique. Dans ce brevet, l'activation du suport cellulosique se fait par irradiation sous atmosphère inerte à une dose d'un mégarad, le textile irradié est plongé dans une solution de méthanol (73% en volume) et d'eau 18% en volume) contenant comme monomère fluoré l'acrylate d'hexafluoroisopropyl 9% en volume) puis il est stocké pendant une durée allant de 15 minutes à 8 heures à la température ambiante, avant d'être lavé au méthanol pour en extraire le monomère ou les homopolymères non greffés. Suivant ce procédé, le taux de greffage nécessaire pour obtenir un caractère répellant significatif est élevé puisqu'il est compris entre 11 et 58% environ, le taux de greffage étant ici défini comme le gain de poids dû au greffon par rapport au poids du matériau non greffé.

D'autre part, il est à souligner que les articles textiles rendus imperméables par enduction de résines fluorées ou mêmes par greffage de monomères fluorés, comme c'est le cas dans le brevet US-A-3,912,449, présentent un caractère répellant irréversible. Une fois traité imperméable, l'article ne peut plus être teint ou imprimé par transfert, le produit fluoré diminuant ou supprimant la mouillabilité de l'article.

Or, on a trouvé, et c'est ce qui fait l'objet de l'invention, un procédé qui pallie les inconvénients constatés dans l'art antérieur. Il s'agit d'un procédé de co-greffage d'un matériau polymérique textile par un monomère fluoré et un dérivé greffable de la morpholine en vue de rendre imperméable à l'eau ledit matériau, selon lequel on crée par activation des radicaux libres sur le matériau, on imprègne le matériau d'une émulsion contenant le dérivé de la morpholine et le monomère fluoré dans un rapport molaire de l'ordre de deux, puis on laisse la réaction de co-greffage se dérouler pendant un temps donné, de façon que le taux de greffage obtenu soit au moins égal à 1%.

On savait par le document FR-A-1 230 487 qu'il était possible d'améliorer l'affinité territoriale d'un support polyamide en greffant, comme monomère de greffage le N-vinyl-3 morpholinone.

De façon inattendue, on a constaté que la présence d'un dérivé greffable de la morpholine permettait d'obtenir une émulsion aqueuse d'un monomère fluoré, simple de mise en oeuvre et stable dans le temps. Le greffage selon le procédé de l'invention est en réalité un cogreffage qui met en jeu simultanément le monomère fuoré et le dérivé greffable de la morpholine. Il semble que le dérivé de la morpholine joue également le rôle de solvant du monomère fluoré. Le terme émulsion est utilisé dans le présent texte même si à certaines concentrations en monomères, le mélange obtenu s'apparente à une solution.

Parmi les dérivés greffables de la morpholine, on a retenu en particulier l'acrylate de morpholinoéthyl ($C_9H_{15}NO_3$) et le méthacrylate de morpholinoéthyl ($C_{10}H_{17}NO_3$). On désignera dans la suite de la description ce dernier dérivé par MEMA ; sa formule développée est la suivante :

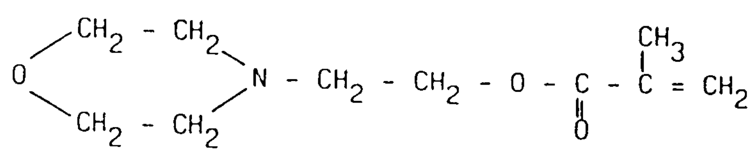

Parmi les monomères fluorés mis en émulsion grâce au dérivé de la morpholine, on a retenu en particulier le 3,3,4,4,5,5, 6,6,7,7,8,8,8-tridécafluorooctyl méthacrylate que l'on désignera dans la suite de la description par FOMA et dont la formule développée est la suivante :

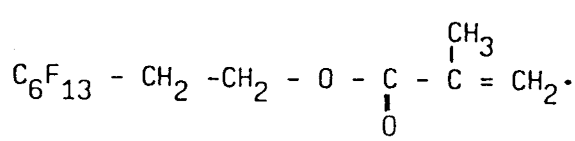

Le bain d'imprégnation de l'article textile est avantageusement une émulsion réalisée en ajoutant au monomère fluoré le dérivé greffable de la morpholine en présence d'au moins un agent tensio-actif puis en ajoutant, sous agitation mécanique, la quantité d'eau souhaitée.

Dans le cas du MEMA et du FOMA, le rapport molaire de l'ordre de deux correspond à un rapport

pondéral sensiblement égal à l'unité.

De préférence, la concentration en poids totale, du dérivé de la morpholine et du monomère fluoré, dans l'émulsion est comprise entre 0,5 et 10 %.

L'activation nécessaire à la création de radicaux libres sur le matériau est d'un type connu, choisi en fonction du matériau à greffer. Elle se fera par exemple par action de l'ozone sur un matériau cellulosique, coton ou lin. Elle se fera par action de l'eau oxygénée ou du persulfate d'ammonium, en milieu acide, sur de la soie ou de la laine. L'eau oxygénée ou le persulfate d'ammonium est ajouté à l'émulsion dont le pH a, avantageusement, été préalablement ajusté entre environ 2 et 3. Ladite activation peut se faire également par pré- irradiation du matériau sous électrons accélérés.

Le matériau greffé selon le procédé comporte des greffons comprenant des groupements fluorés et des groupements morpholine. La quantité de greffons présents dans la structure du matériau polymérique est fonction du taux de greffage. Le taux de greffage, dans la suite de la description est défini comme étant le gain de poids du matériau dû au greffage par rapport au poids du matériau greffé, sec après extraction du monomère et des homopolymères non greffés par l'acétone pendant 4 heures. Le taux de greffage total -les greffons incluant les groupements morpholine et les groupements fluorés- est choisi en fonction de l'application recherchée.

Avantageusement les greffons du matériau greffé comprennent des groupements issus de la polymérisation du 3,3,4,4,5,5,6,6,7,7,8,8,8-tridécafluorooctyl méthacrylate de formule :

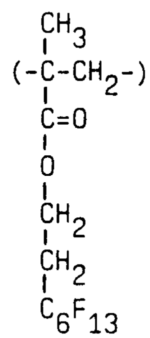

Avantageusement les greffons du matériau greffé comprennent des groupements issus de la polymérisation du méthacrylate de morpholinoéthyl de formule :

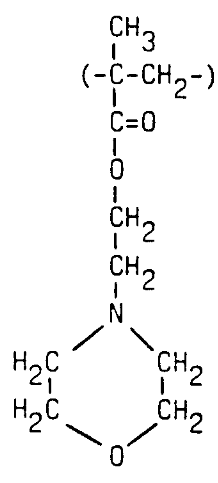

Le caractère répellant conféré est obtenu, contrairement à l'exemple visé ci-dessus du brevet US-A-3 912 449 dès que le greffage atteint un taux de l'ordre de 1 %.

Mais de plus, on constate que le matériau greffé selon l'invention, imperméable à froid ne l'est plus lorsqu'on le plonge dans une solution portée à une température de l'ordre de 60 ° C, ou éventuellement plus basse en présence d'agents tensio-actifs. Ainsi, le matériau greffé selon l'invention peut subir tous les traitements qui nécessitent la mouillabilité du support, puis, après traitement, il retrouve son caractère répellant. Parmi les traitement possibles, on note l'entretien ménager (lavage en présence des produits

lessiviels courants), et l'ennoblissement textile proprement dit : teinture, impression-transfert.

Avantageusement, l'impression transfert sur fibres naturelles est améliorée quand on ajoute dans l'émulsion contenant le monomère fluoré et le dérivé greffable de la morpholine, le phtalate de diallyle comme troisième monomère. De préférence, la quantité de ce troisième monomère dans l'émulsion est du même ordre que celle des deux monomères initiaux.

L'invention sera mieux comprise à la lecture des modes de réalisation donnés ci-dessous qui sont des exemples de l'invention et n'ont pas un caractère limitatif.

Exemple 1 : Coton - activation par ozone

Chaque échantillon de coton est soumis, dans un ozoneur (1,4 ampère, 0,7 bar), au flux d'un mélange d'ozone et d'oxygène pendant une heure. Il est ensuite plongé dans 100 grammes d'une émulsion obtenue en mélangeant du 3,3,4,4,5,5,6,6,7,7,8,8,8-tridécafluorooctyl méthacrylate (FOMA), du méthacrylate de morpholinoéthyl (MEMA) et un agent tensio-actif, puis en ajoutant la quantité d'eau souhaitable pour atteindre la concentration voulue en monomères. L'échantillon, essoré, est enfin traité, sous atmosphère d'azote, à 100 °C pendant un temps donné. Certaines conditions opératoires ont été modifiées et ont donné les résultats suivants :

Exemple 1a :

Le mélange ozone/oxygène produit par l'ozoneur est à 30 grammes d'ozone par mètre cube. Le flux est de 400 litres/heure. L'émulsion a comme composition (en poids) : 0,25 % MEMA - 0,25 % FOMA - 0,03 % tensio-actif anionique. Le tableau 1 ci-dessous indique le taux de greffage obtenu en fonction de la durée du traitement thermique.

Soit $P_0$ le poids de l'échantillon initial, maintenu dans des conditions normales de température et d'humidité (24 heures à 20 °C et 65 % d'humidité relative), $P_1$ le poids du même échantillon après greffage et extraction des monomères et homopolymères non greffés par l'acétone pendant 4 heures, puis conditionnement. Le taux de greffage est égal à :

$$t\ \% = \frac{P_1 - P_0}{P_1} \times 100$$

Tableau 1

| Durée du traitement thermique | t |
|---|---|
| 30 minutes | 1,2 % |
| 60 minutes | 2,7 % |
| 90 minutes | 3,3 % |

Exemple 1b :

Le mélange ozone/oxygène est à 70 grammes d'ozone par mètre cube. Le flux est de 100 litres/heure. L'émulsion a la même composition que dans l'exemple 1a ci-dessus. Le tableau 2 indique le taux de greffage obtenu en fonction de la durée du traitement thermique.

Tableau 2

| Durée (minutes) | t |
|---|---|
| 30 | 0,7 % |
| 60 | 2,6 % |
| 90 | 4,4 % |

Exemple 1c :

Le mélange ozone/oxygène est à 70 grammes d'ozone par mètre cube. Le flux est de 100 litres/heure. Le traitement thermique se déroule à 100 ° C pendant une heure. Le tableau 3 ci-dessous indique le taux de greffage obtenu en fonction de la concentration (en poids) du MEMA et du FOMA dans l'émulsion.

Tableau 3

| Concentration de l'émulsion | | t |
|---|---|---|
| MEMA (%) | FOMA (%) | % |
| 0,8 | 0,2 | 5,52 |
| 0,6 | 0,4 | 6,70 |
| 0,5 | 0,5 | 6,90 |
| 0,4 | 0,6 | 1,14 |

Cet exemple montre bien l'avantage à utiliser une quantité de dérivé de la morpholine supérieure ou de l'ordre de celle du monomère fluoré.

Exemple 1d :

Le réglage de l'ozoneur est modifié : 1,2 ampère, 0,5 bar. Le mélange ozone/oxygène est à 22 grammes d'ozone par mètre cube. Le flux est de 600 litres/heure. Le traitement thermique se déroule à 100 ° C pendant une heure. Le tableau 4 ci-dessous indique le taux de greffage obtenu en fonction de la concentration totale de l'émulsion en monomère. Les quantités de MEMA et de FOMA sont égales ; l'émulsion comprend un tensio-actif non-ionique à raison de 10 % en poids par rapport à la quantité totale de monomère.

Tableau 4

| Concentration (%) | t (%) |
|---|---|
| 1 | 5,3 |
| 5 | 22,7 |

Exemple 2 : Lin - Activation par ozone

L'ozoneur est réglé à 1,2 ampère, 0,5 bar. Le mélange ozone/oxygène est à 22 grammes d'ozone par

mètre cube. Le flux est de 600 litres/heure. Chaque échantillon est plongé dans une émulsion contenant des quantités égales de MEMA et de FOMA et environ 10 % d'un tensio-actif non-ionique par rapport au poids de monomère mis en oeuvre.

Le rapport de bain est de 1 : 20. La réaction de greffage a lieu sous atmosphère d'azote. Le traitement thermique est de 1 heure à 100 ° C. Le tableau 5 ci-dessous indique le taux de greffage obtenu sur les échantillons de lin en fonction de la concentration (en poids) de monomère de l'émulsion.

Tableau 5

| Concentration (%) | t (%) |
|---|---|
| 0,5 | 1,6 |
| 1 | 5,8 |
| 5 | 13,3 |

Exemple 3 : Soie - Activation par l'eau oxygénée

On réalise des émulsions contenant du MEMA et du FOMA en quantités égales et un tensio-actif non-ionique à raison d'environ 10 % (en poids) par rapport au poids total de monomère. Le pH de ces émulsions est amené entre 2 et 3 par addition d'acide formique puis on ajoute une certaine quantité de l'eau oxygénée à 33 % (100 volumes). Le rapport de bain est de 1 : 25. La réaction de greffage a lieu sous atmosphère d'azote pendant 1 heure à 100 ° C.

Le tableau 6 ci-dessous indique le taux de greffage obtenu sur les échantillons de soie en fonction de la quantité d'eau oxygénée ajoutée à une émulsion contenant 1 % de monomère.

Tableau 6

| Quantité $H_2O_2$ | t (%) |
|---|---|
| 0,2 ml/100 g | 7,10 |
| 0,4 ml/100 g | 3,97 |
| 0,6 ml/100 g | 3,02 |

Le tableau ci-dessous indique le taux de greffage obtenu en fonction de la concentration de l'émulsion en monomère.

Tableau 7

| Concentration (%) | t (%) |
|---|---|
| 0,5 | 2,7 |
| 1 | 6,7 |

Exemple 4 : Soie - Activation du persulfate d'ammonium

On réalise des émulsions à certaines concentrations (en poids) en monomère (MEMA et FOMA en quantités égales) et 10 % d'un tensio-actif par rapport au poids total de monomère. Le persulfate est ajouté dans l'émulsion, amenée à un pH compris entre 2 et 3 par addition d'acide formique. La réaction de

greffage est conduite durant 1 heure à 100 °C sans contrôle de l'ambiance.

Le tableau 8 ci-dessous indique le taux de greffage obtenu sur les échantillons de soie en fonction de la quantité de persulfate d'ammonium ajoutée dans une émulsion à 1 % en monomère, le rapport de bain étant de 1 : 30.

Tableau 8

| Quantité de persulfate (%) | t (%) |
|---|---|
| 0,1 gramme/100 grammes | 2,5 |
| 0,3 gramme/100 grammes | 10,4 |
| 0,5 gramme/100 grammes | 10,6 |
| 0,7 gramme/100 grammes | 9,5 |

Le tableau 9 ci-dessous indique le taux de greffage obtenu sur les échantillons de soie en fonction de la concentration en monomère, pour une quantité de persulfate d'ammonium égale à 0,3 g pour 100 g d'émulsion. Le rapport de bain est de 1 : 25.

Tableau 9

| Concentration (%) | t (% ) |
|---|---|
| 0,5 | 5 |
| 0,7 | 8,2 |
| 1 | 9,6 |

Exemple 5 : Laine - Activation au persulfate d'ammonium

L'échantillon de laine se présente sous forme de fil. L'émulsion est à 1 % en monomère (MEMA et FOMA en quantités égales). La réaction de greffage est conduite sous atmosphère d'azote pendant 90 minutes à 90 °C. La quantité de persulfate d'ammonium est de 0,1 gramme pour 100 grammes d'émulsion, celle-ci étant à un pH compris entre 2 et 3 par addition d'acide formique. Le taux de greffage obtenu est de 10,3 %.

Exemple 6 : Permanence au nettoyage à sec

Pour vérifier la permanence du caractère imperméable des matériaux textiles greffés selon le procédé de l'invention, on a greffé successivement trois échantillons, de coton, de soie et de lin, et l'on a fait des tests comparatifs avant et après nettoyage à sec selon deux méthodes : le Spray Test selon la norme NG G 07 056 et le Schmerber selon la norme NG G 07 057.

Le greffage a été réalisé sur des échantillons préalablement activés par ozone, imprégnés dans une émulsion à 1 % du MEMA et de FOMA en quantités égales en poids, puis chauffés une heure à 100 °C. Les échantillons ainsi greffés ont été lavés à l'acétone pendant 4 heures. Les taux de greffage obtenus sont respectivement pour le coton 7,2 %, pour la soie 9,6 % et pour le lin 6,1 %.

Le tableau 10 ci-dessous indique les valeurs du Spray Test et du Schmerber pour les échantillons de départ (A) et pour les mêmes échantillons après que ceux-ci aient subi trois nettoyages à sec (B). Il est à noter que tous les matériaux non greffés selon l'invention présentent des valeurs nulles aux deux tests d'imperméabilisation.

Tableau 10

| | Spray Test (de 0 à 5) | | Schmerber (en mm) | |
|---|---|---|---|---|
| | A | B | A | B |
| coton greffé 7,2 % | 5 | 4 | 200 | 200 |
| soie greffée 9,6 % | 3 | 3 | 325 | 300 |
| lin greffé 6,1 % | 4 | 3 | 110 | 100 |

## Revendications

1. Procédé de co-greffage d'un matériau polymérique textile par un monomère fluoré et un dérivé greffable de la morpholine en vue de rendre imperméable à l'eau ledit matériau, selon lequel on crée par activation des radicaux libres sur le matériau, on imprègne le matériau d'une émulsion contenant le dérivé de la morpholine et le monomère fluoré dans un rapport molaire de l'ordre de deux, puis on laisse la réaction de co-greffage se dérouler pendant un temps donné, de façon que le taux de greffage obtenu soit au moins égal à 1%.

2. Procédé selon la revendication 1, caractérisé en ce que le dérivé greffable de la morpholine est l'acrylate de morpholinoéthyl ou le méthacrylate de morpholinoéthyl.

3. Procédé selon l'une des revendications 1 ou 2, caractérisé en ce que le monomère fluoré est le 3,3,4,4,5,5,6,6,7,7,8,8,8-tridécafluorooctyl méthacrylate.

4. Procédé selon l'une quelconque des revendications 1 à 3, caractérisé en ce que l'émulsion est obtenue en ajoutant au monomère fluoré le dérivé greffable de la morpholine en présence d'au moins un agent tensio-actif puis en ajoutant, sous agitation mécanique, la quantité d'eau souhaitée pour atteindre la concentration en monomère voulue.

5. Procédé selon l'une quelconque des revendications 1 à 5, caractérisé en ce que la concentration totale en poids de monomère dans l'émulsion est comprise entre 0,5 et 10%.

6. Procédé selon l'une quelconque des revendications 1 à 6 du type mettant en oeuvre une activation chimique par eau oxygénée ou persulfate d'ammonium caractérisé en ce que l'on ajoute l'eau oxygénée ou le persulfate d'ammonium à l'émulsion préalablement ajustée à un pH compris entre environ 2 et 3.

7. Procédé selon l'une quelconque des revendications 1 à 7, caractérisé en ce que le matériau polymérique textile est un matériau fibreux de fibres naturelles et en ce qu'on ajoute dans l'émulsion du phtalate de diallyle pour améliorer ainsi l'impression transfert sur le matériau traité.

## Claims

1. Process for co-grafting a polymeric textile material by a fluorinated monomer and a graftable derivative of morpholine so as to render said material waterproof, in which free radicals are created on the material by activation, the material is impregnated with an emulsion containing the derivative of morpholine and the fluorinated monomer within a molar ratio of the order of two, then the co-grafting reaction is left to develop for a given period of time, so that the grafting rate obtained is at least equal

to 1%.

2. Process according to claim 1, characterized in that the graftable derivative of morpholine is morpholinoethyl acrylate or morpholinoethyl methacrylate.

3. Process according to one of claims 1 or 2, characterized in that the fluorinated monomer is 3,3,4,4,5,5,6,6,7,7,8,8,8-tridecafluorooctyl methacrylate.

4. Process according to any one of claims 1 or 3, characterized in that the emulsion is obtained by adding to the fluorinated monomer the graftable derivative of morpholine in the presence of at least one surface-active agent, then by adding, with mechanical stirring, the quantity of water necessary to attain the desired concentration of monomer.

5. Process according to any one of claims 1 to 4, characterized in that the total concentration by weight of monomer in the emulsion is included between 0.5 and 10%.

6. Process according to any one of claims 1 to 5 of the type employing a chemical activation by hydrogen peroxide or ammonium persulfate, characterized in that the hydrogen peroxide or the ammonium persulfate is added to the emulsion which was previously adjusted to a pH of between 2 and 3.

7. Process according to any one of claims 1 to 6, characterized in that the polymeric textile material is a fibrous material made of natural fibers and in that diallyl phthalate is added to the emulsion in order to improve transfer printing on the treated material.

## Patentansprüche

1. Verfahren zum Copfropfen eines polymeren textilen Materials mit einem fluorierten Monomer und einem pfropfbaren Morpholinderivat, um dieses Material wasserdicht zu machen, bei dem durch Aktivierung freie Radikale auf dem Material erzeugt werden, das Material mit einer das Morpholinderivat und das fluorierte Monomer in einem molaren Verhältnis in der Größenordnung von zwei enthaltenden Emulsion imprägniert wird und wobei dann die Copfropfreaktion über eine gegebene Zeitdauer so durchgeführt wird, daß der erhaltene Pfropfgrad mindestens 1 % beträgt.

2. Verfahren nach Anspruch 1,
dadurch gekennzeichnet,
daß das pfropfbare Morpholinderivat Morpholinoethylacrylat oder Morpholinoethylmethacrylat ist.

3. Verfahren nach einem der Ansprüche 1 oder 2,
dadurch gekennzeichnet,
daß das fluorierte Monomer 3,3,4,4,5,5,6,6,7,7,8,8,8-Tridecafluoroctylmethacrylat ist.

4. Verfahren nach einem der Ansprüche 1 bis 3,
dadurch gekennzeichnet,
daß die Emulsion erhalten wird, indem in Gegenwart von mindestens einem grenzflächenaktiven Mittel dem fluorierten Monomer das pfropfbare Morpholinderivat und anschließend unter mechanischem Rühren die gewünschte Menge Wasser zum Erreichen der gewünschten Monomerkonzentration zugegeben wird.

5. Verfahren nach einem der Ansprüche 1 bis 4,
dadurch gekennzeichnet,
daß die Gesamtmassekonzentration an Monomer in der Emulsion zwischen 0,5 und 10 % beträgt.

6. Verfahren nach einem der Ansprüche 1 bis 5,
wobei eine chemische Aktivierung mit Perhydrol oder Ammoniumpersulfat durchgeführt wird,
dadurch gekennzeichnet,
daß das Perhydrol oder das Ammoniumpersulfat der vorher auf einen pH-Wert zwischen 2 und 3 eingestellten Emulsion zugegeben wird.

7. Verfahren nach einem der Ansprüche 1 bis 6,
dadurch gekennzeichnet,
daß das textile polymere Material ein faseriges Material aus Naturfasern ist, und daß der Emulsion Diallylphthalat zugegeben wird, um so die Bedruckbarkeit des behandelten Materials zu verbessern.